# EUROPÄISCHE PATENTANMELDUNG

(11) **EP 0 685 357 A2**
(43) Veröffentlichungstag der Anmeldung: **06.12.1995**
(21) Anmeldenummer: 95104901.4
(22) Anmeldetag: 01.04.1995
(51) Int. Cl.: B60K 15/035, F02M 25/08

(54) **Aktivkohlefilter für Kraftfahrzeuge**

(30) Priorität: 31.05.1994 DE 9408869 U
(71) Anmelder: EXPERT Maschinenbau GmbH, D-64653 Lorsch (DE)
(72) Erfinder: Bernad-Coves, Vicente, E-08950 Esplugas de Llobregat (ES); Köhler, Bernd, D-64646 Heppenheim (DE)
(74) Vertreter: Helber, Friedrich G., Dipl.-Ing.

(57) **Zusammenfassung**

Ein Aktivkohlefilter (10) besteht aus einem Gehäuse mit einem an eine zum Kraftfahrzeug-Tank führende Verbindungsleitung (12) anschließbaren Tank-Einlaß (14), einem an eine zum Saugrohr des Motors geführte Verbindungsleitung (22) anschließbaren, die Kraftstoffdämpfe rückführenden Motor-Auslaß (16) und einem Frischluft-Einlaß (36). Der Tank-Einlaß und der Motor-Auslaß sind innerhalb des Gehäuses unter Umgehung der Aktivkohleschüttung (26) direkt verbunden, während der Frischluft-Einlaß (36) in einem Bereich des Gehäuses geführt ist, welcher durch die Aktivkohleschüttung vom Tank-Einlaß (14) und dem Motor-Auslaß (16) getrennt ist.

Innerhalb des Gehäuses ist dem Tank-Einlaß (14) ein bei Überdruck in der Verbindungsleitung (12) vom Tank (11) zum Aktivkohlefilter (10) zur Aktivkohleschüttung (26) öffnendes Überdruckventil (38) nachgeschaltet, und dem Motor-Auslaß (16) ist ein bei Unterdruck in der zum Saugrohr des Motors (24) führenden Verbindungsleitung (22) öffnendes Saugventil (44) vorgeschaltet.

## Beschreibung

Die Erfindung betrifft einen Aktivkohlefilter für Kraftfahrzeuge zur Adsorption von im Tank sowie gegebenenfalls in der Schwimmerkammer des Vergasers von Kraftfahrzeugen entstehenden Kraftstoffdämpfen und zur Desorption und Rückführung der Dämpfe in die Brennräume des Motors des Kraftfahrzeugs, bestehend aus einem mit einer Schüttung aus Aktivkohle geeigneter Porengröße gefüllten, allseitig geschlossenen Gehäuse mit einem an eine zum Kraftfahrzeug-Tank führende Verbindungsleitung anschließbaren Tank-Einlaß, einem an eine zum Saugrohr des Motors geführte Verbindungsleitung anschließbaren, die Kraftstoffdämpfe rückführenden Motor-Auslaß und einem mit der Umgebungsatmosphäre verbundenen Frischluft-Einlaß, wobei der Tank-Einlaß und der Motor-Auslaß innerhalb des Gehäuses unter Umgehung der Aktivkohleschüttung direkt verbunden sind, während der Frischluft-Einlaß in einen Bereich des Gehäuses geführt ist, welcher durch die Aktivkohleschüttung vom Tank-Einlaß und dem Motor-Auslaß getrennt ist.

Zur Verhinderung des Austritts von Kraftstoffdämpfen ins Freie werden zumindest in der Entlüftungsleitung des Tanks von Personenkraftwagen Aktivkohlefilter angeordnet, welche die bei der Betankung des Kraftfahrzeugs oder auch bei Ausdehnung des Kraftstoffs im Tank infolge Erwärmung über die Tankentlüftung verdrängten Kraftstoffdämpfe in der Aktivkohleschüttung adsorbieren und so deren Austritt in die Umgebungsatmosphäre zumindest so lange verhindern, wie die Adsorptionsfähigkeit der Aktivkohleschüttung nicht erschöpft ist. Durch hinreichende Bemessung der Menge der Aktivkohleschüttung und regelmäßige Desorption und Rückführung der Kraftstoffdämpfe in den Verbrennungskreislauf des Motors kann sichergestellt werden, daß unter normalen Betriebsbedingungen des Kraftfahrzeugs keine Kraftstoffdämpfe in die Umgebungsatmosphäre austreten. Die Desorption erfolgt dabei so, daß Umgebungs- oder Frischluft durch die Aktivkohleschüttung gesaugt und dabei die Kraftstoffdämpfe von der Oberfläche der Aktivkohle gelöst, d.h. desorbiert werden. Zur Erzeugung des erforderlichen Unterdrucks wird der beim Laufen des Motors im Motor-Saugrohr erzeugte Unterdruck verwendet. Dementsprechend weisen Aktivkohlefilter für den hier in Frage stehenden Anwendungsfall also drei Anschlüsse auf, nämlich einen an eine Verbindungsleitung zum Kraftfahrzeug-Tank angeschlossenen Einlaß, über den die Kraftstoffdämpfe in das Gehäuse eintreten, einen zur Umgebungsatmosphäre geöffneten Ein- und Auslaß, über welchen einerseits die von den Kraftstoffdämpfen befreite Luft zur Umgebungsatmosphäre austreten und andererseits beim Desorptionsvorgang Außenluft durch die Aktivkohleschüttung eingesaugt werden kann, und schließlich eine an eine zum Saugrohr bzw. dem Luftfilter des Verbrennungsmotors führende Leitung angeschlossenen Auslaß, über den die desorbierten Kraftstoffdämpfe in den Ansaugtrakt des Motors geführt und dann im Motor verbrannt werden. Üblicherweise werden in den Verbindungsleitungen zwischen dem Tank und dem Gehäuse des Aktivkohlefilters und der Verbindungsleitung zwischen dem Aktivkohle-Gehäuse und dem Motor-Saugrohr ein Ent-/Belüftungsventil bzw. ein Spülventil angeordnet, die entsprechend den Betriebsbedingungen angesteuert werden. Das normalerweise geschlossene Spülventil wird lediglich bei laufendem Motor geöffnet, so daß durch den dann im Gehäuse des Aktivkohlefilters entstehenden Unterdruck über den Frischluft-Einlaß Umgebungsluft nachgesaugt und die in der Aktivkohleschüttung adsorbierten Kraftstoffdämpfe desorbiert werden können. Wenn andererseits durch Entstehung eines erhöhten Dampfdrucks im Tank das Ent-/Belüftungsventil in der Verbindungsleitung zum Aktivkohle-Gehäuse geöffnet wird, werden die in das Aktivkohle-Gehäuse übertretenden Kraftstoffdämpfe zusammen mit der angesaugten Frischluft sogleich in den laufenden Motor weitergeführt und verbrannt, ohne zunächst in der Aktivkohleschüttung adsorbiert zu werden. Lediglich beim Motor-Stillstand und geschlossenem Spülventil treten die Kraftstoffdämpfe in die Aktivkohleschüttung ein und werden in der angestrebten Weise am Austreten in die Umgebungsatmosphäre gehindert. Um den komplexen Aufbau der bekannten Aktivkohlefilter zu vereinfachen, wurden Aktivkohlefilter der eingangs erwähnten Art entwickelt (DE-GM 92 10 525), bei denen der Tank-Einlaß und der Motor-Auslaß an der gleichen Stirnseite des Gehäuses vorgesehen und innerhalb des Gehäuses unter Umgehung der Aktivkohleschüttung direkt verbunden sind, während der Frischluft-Einlaß in einen Bereich des Gehäuses geführt ist, welches durch die Aktivkohleschüttung vom Tank-Einlaß und dem Motor-Auslaß getrennt ist.

Der Erfindung liegt die Aufgabe zugrunde, den bekannten Aktivkohlefilter so weiterzubilden, daß er mit einer deutlich verringerten Füllung aus Aktivkohle in vollem Umfange funktionsfähig bleibt, um so einerseits die Gehäusegröße des Aktivkohlefilters, d.h. seiner Abmessungen, zu verringern und um außerdem Kosten für die relativ teure Aktivkohle einzusparen.

Ausgehend von einem Aktivkohlefilter der eingangs erwähnten Art wird diese Aufgabe erfindungsgemäß dadurch gelöst, daß innerhalb des Gehäuses des Aktivkohlefilters dem Tank-Einlaß nachgeschaltet ein bei einem in der Verbindungsleitung vom Tank zum Aktivkohlefilter auftretenden Überdruck zur Aktivkohleschüttung öffnendes Überdruckventil vorgesehen und daß dem Motor-Auslaß vorgeschaltet ein bei einem in der zum Saugrohr des Motors führenden Verbindungsleitung auftretenden Unterdruck öffnendes Saugventil angeordnet ist. Durch diese Anordnung von Ventilen wird erreicht, daß - bei stehendem Motor - Kraftstoffdämpfe aus dem Tank erst dann in die Aktivkohleschüttung übertreten können, wenn sie einen gewissen, für die Festigkeit des Tanks noch ungefährlichen Überdruck entwickeln. Wird dieser im Überdruckventil eingestellte Überdruck nicht erreicht, treten keine Kraftstoffdämpfe in den Aktivkohlefilter ein und die Adsorptionsfähigkeit der Aktivkohleschüttung wird überhaupt nicht beansprucht. Der eingestellte Überdruck wird nun aber nur in seltenen Fällen, nämlich bei längeren Standzeiten des Kraftfahrzeugs und hoher Außentemperatur, d.h. im Hochsommer, erreicht. In Einzelfällen war es bisher schon üblich, ein solches Überdruckventil direkt im oder am Tank vor der zum Aktivkohlefilter führenden Leitung anzuordnen, wobei diese Ventile aber relativ voluminös und konstruktiv aufwendig ausgebildet sind, so daß Bestrebungen dahin gehen, das Tank-Überdruckventil einzusparen. Durch die Integration des Überdruckventils in den Aktivkohlefilter wird nicht nur eine Einsparung erreicht, sondern das Volumen der vom Kraftstoff-Tank zum Aktivkohlefilter führenden Entlüftungsleitung kommt sozusagen als zusätzlicher Puffer-Raum hinzu, d.h. es muß mehr Kraftstoff verdampfen, bevor die Dämpfe in die Aktivkohleschüttung übertreten können. In der Praxis wird erreicht, daß die Aktivkohleschüttung geringere Mengen von Kraftstoffdämpfe adsorbieren muß, so daß das Volumen der Aktivkohleschüttung und somit auch die Gehäuseabmessungen verringert werden können.

Das dem Tank-Einlaß zugeordnete Überdruckventil wird dabei zweckmäßig so ausgebildet, daß es bei einem Überdruck in der Größenordnung von 18 bis 26 mlb den Durchlaß zur Aktivkohleschüttung des Filters öffnet.

Das auf den Unterdruck im Ansaugtrakt des Motors ansprechende Saugventil seinerseits wird so ausgebildet, daß es bei einem Unterdruck in der Größenordnung von 0,3 bis 0,7 mlb den Durchlaß zur Aktivkohleschüttung öffnet.

In Weiterbildung der Erfindung kann in der im Gehäuse des Aktivkohlefilters vorgesehenen Verbindung des Tank-Einlasses und dem Motor-Auslaß zum Überdruckventil parallel geschaltet zusätzlich ein elektromagnetisch betätigtes Schaltventil angeordnet sein, welches durch Erregung der Spule seiner elektromagnetischen Betätigungseinheit von einer Öffnungs- in die Schließstellung oder der Schließstellung in die Öffnungsstellung umschaltbar ist. Dabei kann die Ausgestaltung beispielsweise so getroffen sein, daß das elektromagnetisch betätigbare Schaltventil bei Nichterregung der Spule der elektromagnetischen Betätigungseinheit in der Öffnungsstellung steht und durch Erregung der Spule in die Schließstellung umgeschaltet wird.

Zweckmäßig kann es sein, wenn dem elektrisch betätigbaren Schaltventil in der Verbindung des Tank-Einlasses und des Motor-Auslasses ein Drosselorgan nachgeschaltet ist.

Die Ansteuerung des elektromagnetischen Ventils kann dabei so erfolgen, daß der Erregerstrom der Spule der elektromagnetischen Betätigungseinheit über eine beim Einschalten der elektrischen Zündanlage und/oder des Starters des Kraftfahrzeugs aktivierte elektronische oder elektrische Steuerung, d.h. beim Ingangsetzen des Kraftfahrzeugs, ausgelöst wird. Alternativ kann die Umschaltung auch durch eine gesonderte, unabhängig vom Einschalten der elektrischen Zündanlage und/oder des Starters des Kraftfahrzeugs auslösbare elektronische Steuereinheit erfolgen, welche direkt an die Batterie des Kraftfahrzeuges angeschlossen ist.

Die Erfindung ist in der folgenden Beschreibung von Ausführungsbeispielen in Verbindung mit der Zeichnung näher erläutert, und zwar zeigt:
- Fig. 1: einen schematischen Schaltplan eines ersten Ausführungsbeispiels eines erfindungsgemäßen Aktivkohlefilters;
- Fig. 2: einen schematischen Schaltplan eines zweiten Ausführungsbeispiels eines erfindungsgemäßen Aktivkohlefilters;
- Fig. 3: eine teilweise entlang einer durch die Mittelachse des Gehäuses gelegten senkrechten Ebene geschnittene Vorderansicht eines entsprechend dem schematisch in Fig. 1 dargestellten Ausführungsbeispiel ausgebildeten Aktivkohlefilters;
- Fig. 4: eine Schnittansicht entlang der Pfeile 4-4 in Fig. 3;
- Fig. 5: eine teilweise in einer senkrechten Ebene geschnittene Seitenansicht des oberen Teils eines dem in Fig. 2 schematisch darsgestellten Ausführungsbeispiels entsprechend ausgebildeten Aktivkohlefilters;
- Fig. 6: eine Schnittansicht durch den in Fig. 5 gezeigten oberen Teil des Aktivkohlefilters in einer gegenüber der Schnittebene von Fig. 5 parallel versetzten, durch ein in der geschlossenen Stellung dargestellte elektromagnetisch betätigtes Ventil gelegten Schnittebene;
- Fig. 7: eine der Schnittansicht gemäß Fig. 6 entsprechende Schnittansicht, in welcher das elektromagnetisch betätigte Ventil in der Öffnungsstellung dargestellt ist; und
- Fig. 8: eine Schnittansicht durch den das Gehäuse des Aktivkohlefilters gemäß den Fig. 5 bis 7 an der Oberseite abschließenden Gehäusedeckel in einer gegenüber den Schnittansichten gemäß den Fig. 5 und 6, 7 parallel versetzten Schnittebene.

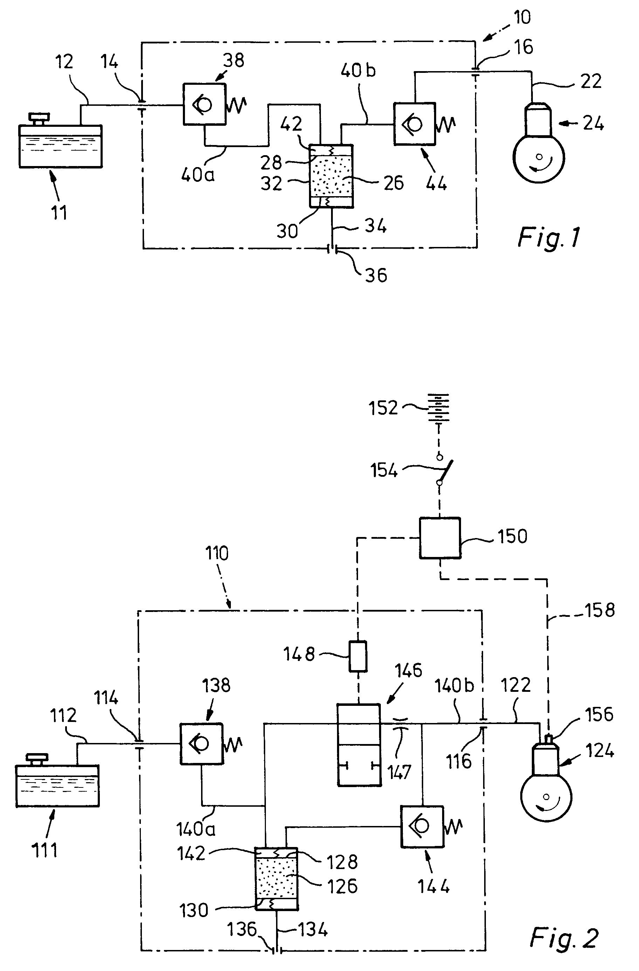

In dem in Fig. 1 gezeigten schematischen Schaltplan ist der erfindungsgemäß aufgebaute Aktivkohlefilter 10 strichpunktiert umrandet, d.h. die innerhalb der strichpunktiert umrandeten Fläche dargestellten Funktionsbauteile sind integraler Teil des Aktivkohlefilters. Über eine Verbindungsleitung 12 ist der mit Kraftstoff gefüllte Tank 11 des zugehörigen - nicht gezeigten - Kraftfahrzeugs mit einem Tank-Einlaß 14 des Aktivkohlefilters verbunden und über eine an einem Motor-Auslaß 16 des Aktivkohlefilters 10 angeschlossenen zweiten Verbindungsleitung 22 ist eine Verbindung des Aktivkohlefilters zum Ansaugsystem, z.B. zum Saugrohr oder zum Luftfilter, des Verbrennungsmotors 24 des zugehörigen Kraftfahrzeugs geschaffen. Innerhalb des Aktivkohlefilters ist eine Aktivkohleschüttung 26 vorgesehen, welche durch jeweils auf ihrer Oberseite und ihrer Unterseite vorgesehene dampf- bzw. gasdurchlässige Trennwände 28, 30 innerhalb eines umschließenden, gasundurchlässigen Gehäuseabschnitts 32 derart elastisch eingespannt gehalten ist, daß die Aktivkohleteilchen der Schüttung 26 sich auch bei den beim Betrieb des Kraftfahrzeugs zwangsläufig auftretenden Erschütterungen nicht gegeneinander verschieben und durch die dabei auftretende Reibung zerstören können. Der unterhalb der gasdurchlässigen Trennwand 30 gebildete Raum des Aktivkohlefilters steht - über die in Fig. 1 schematisch dargestellte Leitung 34 mit einem Frischluft-Einlaß 36 in Verbindung, über welche Umgebungsatmosphäre in den Aktivkohlefilter angesaugt werden kann.

Vom Tank-Einlaß 14 ist über ein dem Tank-Einlaß nachgeschaltetes Überdruckventil 38 eine in der Zeichnung schematisch als Leitung 40a dargestellte Verbindung zu dem oberhalb der Trennwand 28 über der Aktivkohleschüttung 26 gebildeten Gehäuseraum 42 geschaffen, der außerdem über eine weitere als Leitung 40b dargestellte Verbindung über ein Saugventil 44 an den Motor-Auslaß 16 angeschlossen ist.

Die Funktion der beschriebenen Schaltung ist nun so, daß im Tank 11 bei Erwärmung entstehende Kraftstoffdämpfe über die Verbindungsleitung 12 zum Tank-Einlaß 14 übertreten können. Der Tank selbst ist hermetisch verschlossen, so daß sich in den Kraftstoffdämpfen bei Erwärmung ein Überdruck gegenüber der Umgebungsatmosphäre aufbauen kann. Sobald dieser Überdruck eine gewisse Größe - die beispielsweise bei 22 mlb liegen möge - erreicht, öffnet sich das auf diesen Grenzwert eingestellte Überdruckventil 38 und die Kraftstoffdämpfe können über die Verbindung 40a in den oberhalb der Aktivkohleschüttung 26 gebildeten Raum 42 und von diesem über die gasdurchlässige Trennwand 28 in die Aktivkohleschüttung 26 übertreten, wo die Kraftstoffdämpfe adsorbiert und somit in der Aktivkohleschüttung zurückgehalten werden, während die in dem vom Tank kommenden Kraftstoffdampf-/Luftgemisch enthaltene Luft durch die Aktivkohleschüttung 26 hindurch bis zum Frischluft-Einlaß 36 hindurchtreten kann. Durch geeignete Bemessung der Menge bzw. des Volumens der Aktivkohleschüttung 26 wird sichergestellt, daß die Adsorbtionsfähigkeit der Aktivkohleschüttung 26 in jedem Falle hinreicht, um auch unter ungünstigen Umständen entstehende Kraftstoffdampf-Mengen zu adsorbieren.

Wird das Kraftfahrzeug in Betrieb gesetzt, d.h. der Verbrennungsmotor 24 gestartet, wirkt über die Verbindungsleitung 22 ein Unterdruck auf das Saugventil 44 ein, welche sich öffnet und über die Verbindung 40b zunächst das oberhalb der Aktivkohleschüttung 26 befindliche Kraftstoffdampf-/Luftgemisch absaugt und der Verbrennungsluft des Motors zuführt. Da hierbei dann auch der Druck in der Verbindungsleitung 12 zum Tank 11 abgebaut wird, schließt das Überdruckventil 38 und der Unterdruck wirkt dann auf die Aktivkohleschüttung ein und saugt über den Frischluft-Einlaß 36 Umgebungsatmosphäre durch die Aktivkohleschüttung nach. Hierbei werden die in der Aktivkohleschüttung adsorbtiv gebundenen Kraftstoffdämpfe desorbiert und ebenfalls der Verbrennungsluft des Motors zugeführt. D.h. bei laufendem Motor wird die Aktivkohleschüttung 26 regeneriert und steht dann wieder für die Adsorbtion von Kraftstoffdämpfen zur Verfügung, die vom Tank 16 aus über die Verbindungsleitung 12 dem Aktivkohlefilter 10 zugeführt werden.

Bevor ein entsprechend dem Schaltplan gemäß Fig. 1 ausgebildetes Ausführungsbeispiel des Aktivkohlefilters 10 näher beschrieben wird, soll anhand des in Fig. 2 gezeigten Schaltplans noch ein abgewandeltes Ausführungsbeispiel eines Aktivkohlefilters 110 kurz angesprochen werden, der dann ebenfalls noch näher erläutert wird.

Der Aktivkohlefilter 110 hat grundsätzlich den gleichen Aufbau wie der Aktivkohlefilter 10, so daß es genügt, nachstehend nur die getroffene Weiterbildung zu beschreiben, während für die übereinstimmenden Funktionsbauteile und Schaltungen auf die vorausgehende Beschreibung verwiesen werden kann, zumal gleichen Teilen in beiden Zeichnungen gleiche Bezugszeichen zugeordnet sind, denen lediglich beim Ausführungsbeispiel gemäß Fig. 2 eine "1" vorangestellt ist.

Der Aktivkohlefilter 110 ist gegenüber dem Aktivkohlefilter 10 dadurch weitergebildet, daß in die innerhalb des Aktivkohlefilters bestehende, die Aktivkohleschüttung 126 umgehende Verbindung zwischen dem Tank-Einlaß 114 und dem Motor-Auslaß 116 dem Überdruckventil 138 nachgeschaltet ein elektromagnetisch betätigbares Schaltventil 146 parallel zum Saugventil 144 geschaltet ist, welches von einer Betätigungseinrichtung 148 umschaltbar ist, die in üblicher Weise eine Erregerspule umfaßt, in welche bei Zufuhr eines Erregerstroms von einer elektronischen Steuereinheit 150 aus ein mit dem eigentlichen Ventilschaltkörper verbundener Anker eingezogen wird. Dadurch wird das Schaltventil 146 aus einer Schaltstellung - beispielsweise der in Fig. 2 dargestellten geöffneten Stellung - in die andere, d.h. die geschlossene Stellung, umgeschaltet. Sobald die Steuereinheit 150 den Erregerstrom abschaltet, fällt der Anker ab und der Ventilschaltkörper des Schaltventils 146 wird wieder in die Ausgangs-Schaltstellung zurückgeführt. In dem dem Überdruckventil 138 nachgeschalteten elektromagnetisch betätigbaren Schaltventil 146 oder dem Leitungszweig, in den das Schaltventil zugeschaltet ist, kann eine Drosselstelle vorgesehen sein, wie sie in der Zeichnung bei 147 schematisch angedeutet ist. Der elektrische Energie für die Erzeugung des Erregerstroms entnimmt die Steuereinheit 150 der Fahrzeugbatterie 152. Ein in der Verbindung zwischen der Batterie 152 und der Steuereinheit 150 angeordneter Schalter 154 erlaubt die wahlweise Schaltung des Schaltventils 146. Wenn andererseits die Steuereinheit 150 mit der elektronischen oder elektrischen Steuereinheit für die Zündanlage des Motors des Kraftfahrzeugs vereinigt wird, ist der Schalter 154 zweckmäßig in den Schalter, mit welchem die elektrische Zündanlage des Kraftfahrzeugs eingeschaltet wird, integriert, so daß das elektromagnetisch betätigte Schaltventil 146 beim Anlassen des Kraftfahrzeugs automatisch umgeschaltet wird. Diese Integration der elektronischen Steuereinheit 150 für das elektromagnetisch betätigte Schaltventil 146 mit der Steuereinheit für die elektrische Zündanlage ist in der Zeichnungsfigur nur schematisch durch eine von der Steuereinheit 150 zur einer Zündkerze 156 des Motors 124 geführte gestrichelte elektrische Leitung 158 veranschaulicht.

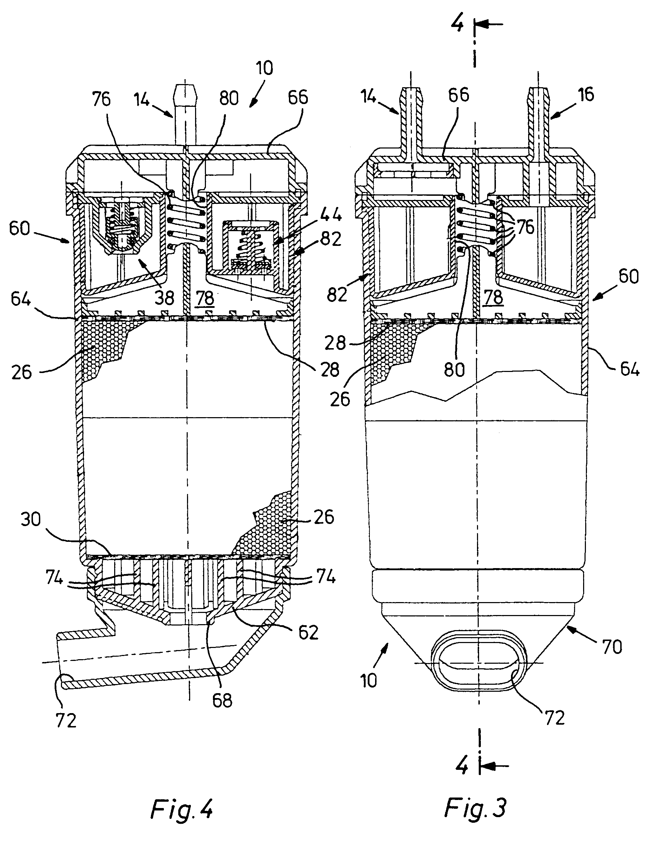

In Verbindung mit den Figuren 3 und 4 soll nachfolgend der konstruktive Aufbau eines Aktivkohlefilters 10 beschrieben werden, der im schaltungsmäßigen Aufbau dem in Fig. 1 dargestellten Aktivkohlefilter 10 entspricht. Der Aktivkohlefilter 10 weist ein allseitig geschlossenes Gehäuse 60 aus Kunststoff auf, welches aus dem eigentlichen, beispielsweise über den größeren Teil seiner Erstreckung zylindrischen und an einer Stirnseite durch eine Stirnwand 62 geschlossenen Grundgehäuse 64 besteht, dessen andere, offene Stirnseite durch einen gesonderten Stirndeckel 66 verschlossen ist, der nach der Montage des Aktivkohlefilters - beispielsweise durch Heißspiegelschweißung - unlösbar mit dem Grundgehäuse 64 verbunden ist. Mittig an der unteren Stirnwand 62 des Gehäuses 60 ist ein Einlaßstutzen 68 angeordnet, über den im dargestellten Fall ein drehbares Ansauggehäuse 70 gerastet ist, welches eine Verdrehung des eigentlichen Luft-Ansaugstutzens 72 und somit eine Anpassung an die baulichen Gegebenheiten unterschiedlicher Kraftfahrzeuge erlaubt. Der Einlaßstutzen 68 hat also die Funktion eines Frischluft-Einlasses in das Gehäuse 60. Der das Grundgehäuse 64 an seiner oberen Stirnseite verschließende Stirndeckel 66 weist zwei Anschlüsse auf, nämlich den an die Verbindungsleitung 12 zum Kraftstofftank 16 anschließbaren Tank-Einlaß 14 und den an die zum Saugrohr bzw. Luftfiltergehäuse des Motors 24 des zugehörigen Kraftfahrzeugs führende Verbindungsleitung 22 anschließbaren Motor-Auslaß 16. Der Tank-Einlaß 14 und der Motor-Auslaß 16 haben im dargestellten Fall die Form von am Stirndeckel 66 einstückig angespritzten Stutzen.

Im mittleren - in Fig. 1 mit 32 bezeichneten - zylindrischen Bereich des Grundgehäuses 64 ist die Schüttung 26 aus Aktivkohleteilchen geeigneter Porengröße angeordnet und zwischen den beiden als dampf- bzw. gasdurchlässigen Abdeckplatten ausgebildeten Trennwänden 28 bzw. 30 unter Vorspannung gehalten, so daß die Aktivkohleteilchen auch bei Erschütterungen oder unter dem Einfluß von Beschleunigungskräften sich nicht relativ zueinander verschieben und so zerreiben können.

Die untere Abdeckplatte 30 wird durch Stützrippen 74 oberhalb der Mündung des Frischluft-Einlasses 68 gehalten und ist mit einer Vielzahl von (nicht gezeigten) Durchlaßöffnungen versehen, deren Größe kleiner als die Partikelgröße der Aktivkohle gewählt ist.

Die die Aktivkohleschüttung 26 auf der Oberseite abschließende gasdurchlässige Abdeckplatte 28 wird von einer Feder 76 und ein auf ihre Oberseite aufgedrücktes Druckelement 78 unter Vorspannung gehalten. Die Feder 76 ist andererseits am Stirndeckel 66 abgestützt.

Im zwischen der gasdurchlässigen Abdeckplatte 28 und dem Stirndeckel gebildeten Raum ist ein mit einem mittigen Durchlaß 80 versehener Einsatz 82 angeordnet, in welchem Kammern für das Überdruckventil 38 und das Saugventil 44 ausgebildet sind, die dann in geeigneter Weise mit dem Tank-Einlaß 14 bzw. dem Motor-Auslaß 16 einerseits und andererseits mit dem oberhalb der gasdurchlässigen Abdeckplatte 28 im Gehäuse 60 ausgebildeten Innenraum in Verbindung stehen.

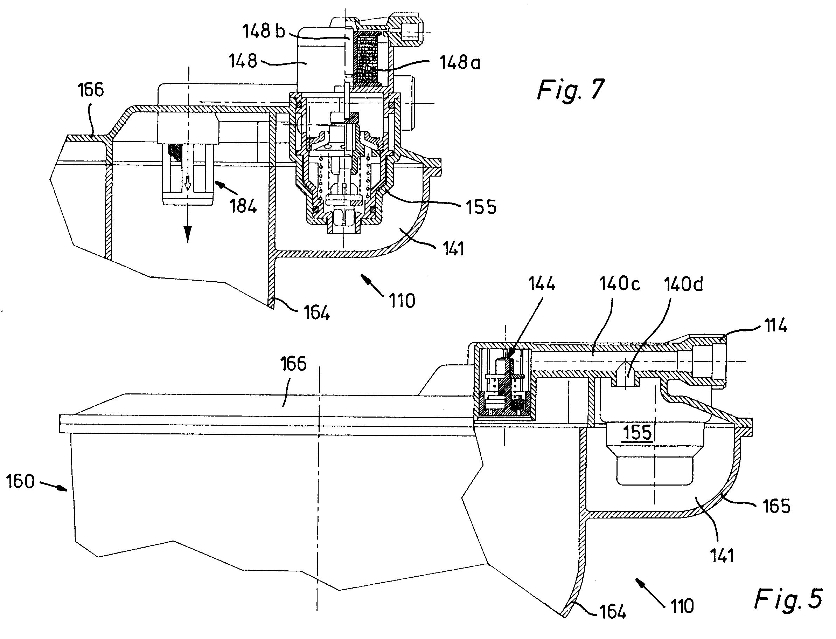

Der in den Figuren 5 bis 8 gezeigte Aktivkohlefilter 110 entspricht funktionell dem in Fig. 2 schematisch dargestellten und in seiner Funktion beschriebenen Aktivkohlefilter, d.h. er weist gegenüber dem Aktivkohlefilter 10 das zusätzlich vorgesehene elektromagnetisch betätigte Schaltventil 146 auf, das - wie nachstehend noch erläutert wird - im speziellen Fall mit dem Überdruckventil 138 zusammengebaut ist. Da gleichen Funktionsbauteilen des Aktivkohlefilters 110 in den Zeichnungsfiguren wiederum die gleichen Bezugszeichen wie dem Aktivkohlefilter 10 mit vorangestellter "1" zugeordnet sind, werden nachfolgend wiederum nur die gegenüber dem Aktivkohlefilter 10 getroffenen Abwandlungen und Weiterbildungen beschrieben.

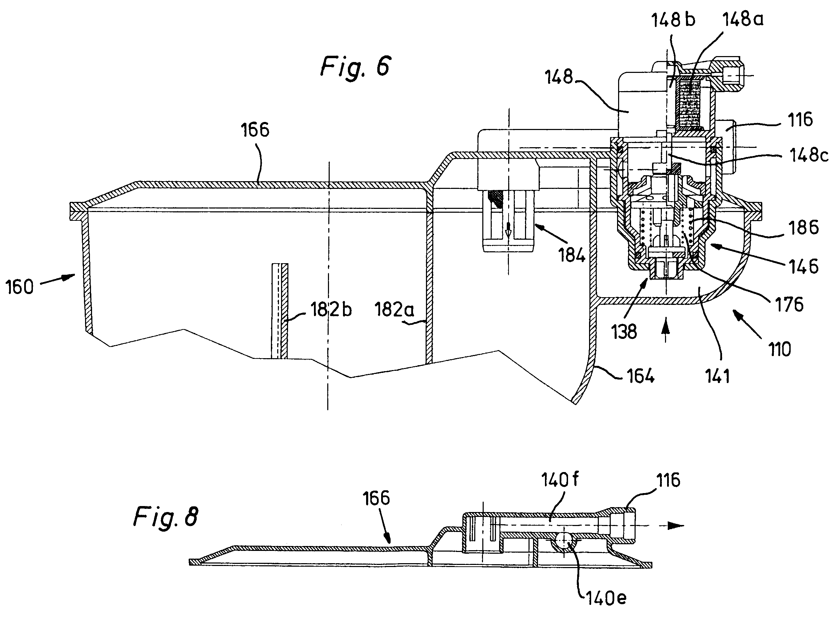

Ein augenfälliger Unterschied ist in der Form des Grundgehäuses 164 und des ihm angepaßten und seine Oberseite verschließenden Stirndeckels 166 zu erkennen Aus Gründen, die nur mit den räumlichen Platzverhältnissen zu tun haben, ist das Grundgehäuse 164 hier mit größerer Breite und geringerer Tiefe bemessen, d.h. das Grundgehäuse hat in der Draufsicht die Form eines langgestreckten Rechtecks. Im Innern des Gehäuses sind Trennwände 182a und 182b (Fig. 6) vorgesehen, welche abwechselnd vom Stirndeckel 166 bis in die Nähe des Bodens des Grundgehäuses 164 und dann vom Boden des Grundgehäuses 164 bis in die Nähe des Stirndeckels 166 zwischen den Flachseiten des Grundgehäuses 164 angeordnet sind und so sowohl der beim Regenerieren aus dem - nicht gezeigten - Frischluft-Einlaß angesaugten Frischluft als auch eventuell über den Tank-Einlass eintretenden Kraftstoffdämpfen eine vorbestimmten mäanderartigen Durchtrittsweg aufzwingen, der sicherstellt, daß die Resorption von in der Aktivkohleschüttung adsorbierten Kraftstoffdämpfen möglichst vollständig bzw. die Adsorptionsfähigkeit der Aktivkohleschüttung weitestgehend ausgenutzt wird.

Wesentlich beim Aktivkohlefilter 110 ist, daß auf einen dem gesonderten Einsatz 82 des Aktivkohlefilters 10 entsprechenden Einsatz im Grundgehäuse 164 verzichtet ist, und daß die für die Anordnung der Ventile (Überdruckventil 138; Saugventil 144 und elektromagnetisch betätigtes Schaltventil 146) erforderlichen Aufnahmeräume und Strömungswege entsprechende Kammern und Kanäle mit Durchlässen im Gehäuse selbst sowie - hauptsächlich - im Stirndeckel 166 ausgebildet sind. Sowohl der Tank-Einlaß 114 als auch der Motor-Auslaß 116 münden zunächst in im Stirndeckel 166 ausgebildete Kanäle, von denen der an den Tank-Einlaß 114 anschließende Kanal 140c einerseits bis zum Saugventil 144 geführt ist und andererseits über eine Abzweigung 140d in eine Kammer 141 führt, die in einem Ansatz 165 des Grundgehäuses 164 einerseits und im Stirndeckel 166 andererseits ausgebildet ist, wobei die Kammer 141 gegenüber dem die Aktivkohleschüttung aufnehmenden Innern des Grundgehäuses 164 abgeschlossen ist. In die Kammer 141 ragt ein integral im Stirndeckel ausgebildetes Ventilgehäuse 155, in welches ein die Funktion des Überdruckventils 138 und des elektromagnetisch betätigten Schaltventils 146 vereinigendes Kombinationsventil eingesetzt ist. Das dieses Kombinationsventil 138, 146 aufnehmende Ventilgehäuse 155 ist über einen Abzweig 140e an einen zum Motor-Auslaß 116 führenden, im Stirndeckel 166 ausgebildeten Kanal 140f angeschlossen, der außerdem an seinem dem Motor-Auslaß 116 abgewandten Ende über einen Filter 184 in dem mit der Aktivkohleschüttung gefüllten Innern des Gehäuses 164 mündet.

Bei geöffnetem elektromagnetisch betätigten Schaltventil 146 besteht also eine Verbindung zwischen dem Tank-Einlaß 114 und dem Motor-Auslaß 116 über den Kanal 140c, den Abzweig 140d, die Kammer 141, den Abzweig 140e und den Kanal 140f, während bei geschlossenem Schaltventil 146 ein Übertritt von Kraftstoffdampf-/Luftgemisch über den Tank-Einlaß 114, den Kanal 140c, den Abzweig 140d und die Kammer 141 zum Abzweig 140c und den Kanal 140f ins Gehäuseinnere (über den Filter 184) bzw. zum Ansaugtrakt des Motors (über den Motor-Auslaß 116) nur dann möglich ist, wenn der im Überdruckventil 138 eingestellte geringe Überdruck in der Größenordnung von 22 mlb das Überdruckventil in die Öffnungsstellung angehoben hat.

Aus den Zeichnungsfiguren 6 und 7, in denen das elektromagnetisch betätigbare Schaltventil in der geschlossenen und der Öffnungsstellung gezeigt ist, geht hervor, daß im speziellen Fall das elektromagnetisch betätigte Ventil durch die Feder 186 in die Öffnungsstellung vorgespannt wird, d.h. bei nicht erregter Erregerspule 148a der Anker 148b über den Verbindungsstößel 148c ein Stück aus der Erregerspule 148a herausgedrängt wird. Sobald dann ein Erregerstrom in der Spule 148a fließt, wird der Anker in die Spule zurückgezogen und das Schaltorgan des Schaltventils 146 entgegen der Vorspannung der ihn in die Öffnungsstellung drängenden Feder 186 in die Schließstellung geführt. Die Anordnung eines solchen, die Funktionen des Überdruckventils 138 und des elektromagnetisch betätigbaren Schaltventils 146 kombinierenden Ventils stellt einen konstruktiven Aufwand dar, welcher den Aktivkohlefilter 110 gegenüber dem rein auf mechanischer Basis arbeitenden selbsttätigenden Aktivkohlefilter 10 verteuert. Aufgrund bestimmter Vorschriften in einzelnen Ländern, welche die Möglichkeit der Funktionsprüfung der Aktivkohlefilter unter bestimmten Bedingungen vorschreiben, kann die Anordnung eines solchen elektromagnetischen Ventils jedoch erforderlich sein.

Es ist ersichtlich, daß im Rahmen des Erfindungsgedankens Abwandlungen und Weiterbildungen der beschriebenen Ausführungsbeispiele verwirklichbar sind, welche sich so auf die äußere Form und Ausgestaltung der Gehäuse und Stirndeckel der Aktivkohlefilter als auch die Lage und Form der Anschlüsse beziehen. Wesentlich ist lediglich, daß im Aktivkohlefilter selbst dem Tank-Einlaß 14, 114 nachgeschaltet ein Überdruckventil vorgesehen ist, welches die am Austritt in die Umgebungsatmosphäre zu hindernden Kraftstoffdämpfen erst dann in die Aktivkohleschüttung 26 übertreten läßt, wenn ein gewisser Überdruck in dem im Kraftstofftank entstehenden Kraftstoffdampf-/Luftgemisch aufgebaut worden ist.

## Patentansprüche

1. Aktivkohlefilter (10; 110) für Kraftfahrzeuge zur Adsorption von im Tank (11; 111) sowie gegebenenfalls in der Schwimmerkammer des Vergasers von Kraftfahrzeugen entstehenden Kraftstoffdämpfen und zur Desorption und Rückführung der Dämpfe in die Brennräume des Motors (24; 124) des Kraftfahrzeugs, bestehend aus einem mit einer Schüttung (26; 126) aus Aktivkohle geeigneter Porengröße gefüllten, allseitig geschlossenen Gehäuse (60; 160) mit einem an eine zum Kraftfahrzeug-Tank führende Verbindungsleitung (12; 112) anschließbaren Tank-Einlaß (14; 114), einem an eine zum Saugrohr des Motors geführte Verbindungsleitung (22; 122) anschließbaren, die Kraftstoffdämpfe rückführenden Motor-Auslaß (16; 116) und einem mit der Umgebungsatmosphäre verbundenen Frischluft-Einlaß (36; 136), wobei der Tank-Einlaß und der Motor-Auslaß innerhalb des Gehäuses unter Umgehung der Aktivkohleschüttung (26; 126) direkt verbunden sind, während der Frischluft-Einlaß (36; 136) in einen Bereich des Gehäuses (60; 160) geführt ist, welcher durch die Aktivkohleschüttung vom Tank-Einlaß (14; 114) und dem Motor-Auslaß (16; 116) getrennt ist,
**dadurch gekennzeichnet,**
daß innerhalb des Gehäuses des Aktivkohlefilters (10; 110) dem Tank-Einlaß (14; 114) nachgeschaltet ein bei einem in der Verbindungsleitung (12; 112) vom Tank (11; 111) zum Aktivkohlefilter (10; 110) auftretenden Überdruck zur Aktivkohleschüttung (26; 126) öffnendes Überdruckventil (38; 138) vorgesehen und daß dem Motor-Auslaß (16; 116) vorgeschaltet ein bei einem in der zum Saugrohr des Motors (24; 124) führenden Verbindungsleitung (22; 122) auftretenden Unterdruck öffnendes Saugventil (44; 144) angeordnet ist.

2. Aktivkohlefilter nach Anspruch 1, dadurch gekennzeichnet, daß das dem Tank-Einlaß (14; 114) zugeordnete Überdruckventil (38; 138) bei einem Überdruck in der Größenordnung von 18 bis 26 mlb den Durchlaß zur Aktivkohleschüttung ((26; 126) des Aktivkohlefilters (10; 110) öffnet.

3. Aktivkohlefilter nach Anspruch 1 oder 2, dadurch gekennzeichnet, daß das Saugventil (44; 144) bei einem Unterdruck in der Größenordnung von 0,3 bis 0,7 mlb den Durchlaß zur Aktivkohleschüttung öffnet.

4. Aktivkohlefilter nach einem der Ansprüche 1 bis 3, dadurch gekennzeichnet, daß in der im Gehäuse (160) des Aktivkohlefilters (110) vorgesehenen Verbindung des Tank-Einlasses (114) und dem Motor-Auslaß (116) dem Überdruckventil nachgeschaltet ein elektromagnetisch betätigbares Schaltventil (146) angeordnet ist, welches durch Erregung der Spule (148a) der elektromagnetischen Betätigungseinheit (148) das Schaltventil von einer Öffnungs- in die Schließstellung oder der Schließstellung in die Öffnungsstellung umschaltet.

5. Aktivkohlefilter nach Anspruch 4, dadurch gekennzeichnet, daß das elektromagnetisch betätigbare Schaltventil (146) bei Nichterregung der Spule (148a) der elektromagnetischen Betätigungseinheit (148) in der Öffnungsstellung steht und durch Erregung der Spule (148a) in die Schließstellung umgeschaltet wird.

6. Aktivkohlefilter nach Anspruch 4 oder 5, dadurch gekennzeichnet, daß in der Verbindung des Tank-Einlasses (114) und des Motor-Auslasses (116) im Gehäuse (160) des Aktivkohlefilters dem elektromagnetisch betätigbaren Schaltventil (146) ein Drosselorgan (147) nachgeschaltet ist.

7. Aktivkohlefilter nach Anspruch 5 oder 6, dadurch gekennzeichnet, daß der Erregerstrom der Spule (148a) der elektromagnetischen Betätigungseinheit (148) über eine beim Einschalten der elektrischen Zündanlage und/oder des Starters des Kraftfahrzeugs aktivierte elektronische oder elektrische Steuerung (150) ausgelöst wird.

8. Aktivkohlefilter nach Anspruch 5 oder 6, dadurch gekennzeichnet, daß der Erregerstrom der Spule (148a) der elektromagnetischen Betätigugseinheit (148) unabhängig vom Einschalten der elektrischen Zündanlage und/oder des Starters des Kraftfahrzeugs auslösbar ist.
